# EUROPEAN PATENT SPECIFICATION

(11) **EP 0 422 734 B1**
(45) Date of publication and mention of the grant of the patent: **18.05.1994**
(21) Application number: 90202670.7
(22) Date of filing: 08.10.1990
(51) Int. Cl.: B01D 11/04

(54) **Process for extractingn-paraffins from a liquid phase by means of supercritical CO2 in a column equipped with perforated trays**
Verfahren zur Extraktion von n-Paraffinen aus einer flüssigen Phase mit überkritischem C02 in einer Kolonne mit perforierten Platten
Procéde d'extraction de n-paraffines d'un liquide à l'aide de CO2 supercritique dans une colonne à plateaux perforés

(30) Priority: 12.10.1989 IT 2200889
(43) Date of publication of application: 17.04.1991
(73) Proprietor: ENICHEM AUGUSTA S.P.A., 90139 Palermo (IT)
(72) Inventor: Paret, Giancarlo, I-20097 San Donato Milanese (Milan) (IT); Franco, Cosimo, I-20097 San Donato Milanese (Milan) (IT)
(74) Representative: Fusina, Gerolamo

(56) References cited:
- EP-A- 0 129 459
- EP-A- 0 261 700
- US-A- 4 508 597

## Description

The present invention relates to a new process for extracting n-paraffins from mixtures which contain them, which process uses a gas under supercritical conditions, which acts in countercurrent in a tower of novel conception and containing a series of perforated trays, particularly suitable for such types of extractions.

The process disclosed in the present invention is particularly suitable for separating unreacted n-paraffins from the remainder of the reaction mixture in the processes of sulfonation of said n-paraffins.

The fractionation of complex mixtures into their individual components has always been one of the most serious problems from an industrial view point, in that the modern industrial processes have got more and more refined in the preparation of products as free as possible from byproducts and unreacted substances.

Such a demand is particularly felt in the processes of sulfonation of n-paraffins, in which said n-paraffins should be separated as extensively as possible from the reacted products not only owing to self-explanatory economic reasons, but also because their presence is undesired for the uses the paraffinsulfonic acids are destined to.

The solutions generally proposed for separations of byproducts of the above described type are still now the operations of liquid/liquid extraction, which are carried out by using equipment with the most different characteristics.

Such is, e.g., the case disclosed in European patent 131,913, according to which the reaction products coming from the reactor of sulfonation of n-paraffins are separated by means of a double treatment of extraction with isopropanol and methylene chloride followed by the end distillation of the phase rich of n-paraffins.

Considerably cheaper and more selective processes than the liquid/liquid process have been proposed recently for extracting various components from reaction mixtures which contain them; such systems have recourse to fluids kept under supercritical conditions, i.e., under pressure and temperature conditions which are above the critic conditions of said fluids.

The fluids which operate under such conditions are extremely sensitive to the changes in the pressure of the system in which they operate. In fact, small differences in the pressure or in the temperature of a supercritical fluid cause considerable changes to take place in its density.

If, besides the above, one considers the fact that the supercritical fluids have a viscosity similar to those of the gases, one will understand why such supercritical fluids are being used more and more extensively in the extraction operations. As the solvent power of a fluid is strongly depending on the density of the same fluid, small differences in pressure in the region of supercritical temperature and pressure values cause, owing to the above outlined reasons, changes in the solubility and selectivity of the same fluid, thus considerably increasing the speed of extraction and release of the solute in the extraction processes.

A process of extraction of n-paraffins from their mixtures with sulfonated paraffins based on the use of supercritical CO₂ is disclosed in European Patent No. 0261700.
In order to carry out such a process, the use is provided of an extraction apparatus which is essentially constituted by an extractor to which the mixture is charged, which contains the product which has to be extracted with supercritical CO₂, and a separator in which CO₂, separated from the extracted substance, is recycled to the extractor by means of metering pumps, after being previously condensed.

This process, advantageous owing to the use of a supercritical gas as compared to the well-known liquid/liquid systems, is however carried out batchwise, which not always results in immediate operating advantages.

Such advantages could evidently be achieved if the benefits deriving from the use of a supercritical gas were combined with an extraction methodology performed in counter-current mode, using from time to time apparatuses endowed with the characteristics suitable for the intended purpose, exactly as the situation has always been in the case of liquid/liquid systems. On the contrary, still now, for systems comprising supercritical gases put into contact with liquids, no data are available, which may be comparable to the data available for liquid/liquid systems.

Therefore, the purpose of the present invention is a novel process for extracting normal paraffins from a liquid phase containing said n.paraffins, in admixture with sulphonated n.paraffins, sulphonic acids, water and sulphuric acids, by the agency of supercritical CO₂, characterized in that the extraction step is carried out in an extraction tower equipped with perforated trays, at a temperature higher than 35°C and a pressure higher than 122 bar (120 atm), said supercrtical CO₂ being fed in countercurrent relationship relative to said liquid phase.

According to as disclosed in greater detail in the following examples, the novel process makes it possible high purities to be achieved of the products to he separated, together with high extraction yields and high efficiencies, as referred to the used amount of critic gas.

In particular, according to the method of the present invention the extracting fluid is fed, under temperature and pressure conditions which exceed the critic conditions of said extracting fluid, to the bottom of the extraction tower, which contains a series of perforated trays -- an example of practical embodiment of which is disclosed in the following -- and from the top of the tower the heavier, liquid mixture to be submitted to extraction is fed under countercurrent flow conditions.

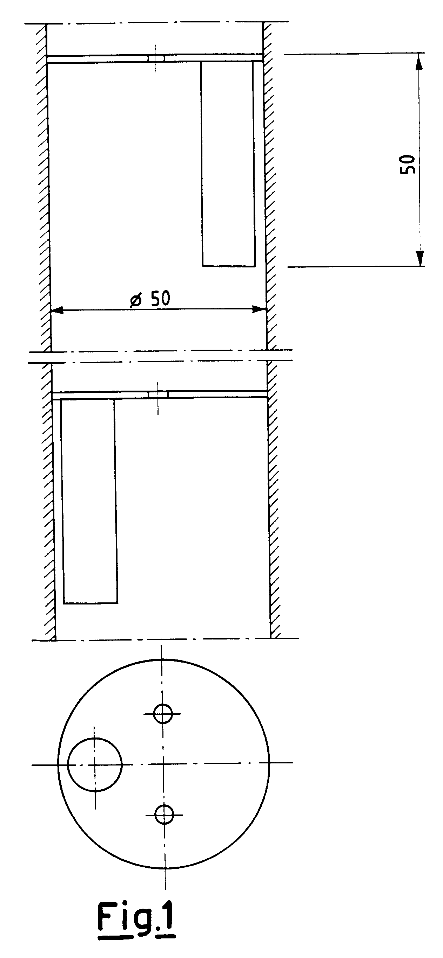

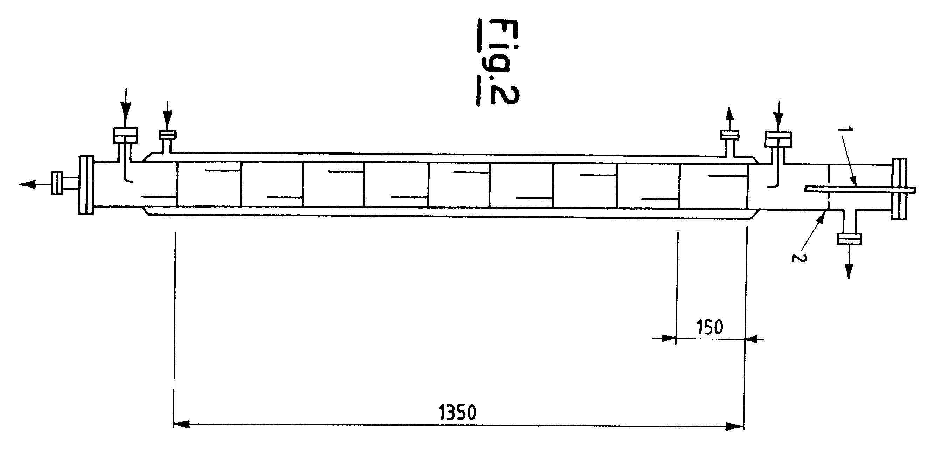

If supercritical fluid is CO₂, which, as said, showed to be particularly suitable for the extraction of n-paraffins from their mixtures with sulfonated paraffins, it is necessary to operate under temperature and pressure conditions respectively higher than 35°C and 122 bar (120 atm). An example of extraction tower which, as said, constitutes an integral aspect of the present invention, is disclosed in the hereto attached figures 1 and 2. The experimental tests reported in the following were carried out by using such a column shown in figures 1 and 2.

Referring to Figures 1 and 2, the tower consists of a high-pressure tube closed at its ends by flat flanges and provided with the necessary side fittings. Along a portion of said tube the trays are installed and kept in position by means of thin-wall tubular spacer elements whose outer diameter is slightly lower than the inner diameter of the tube which constitutes the tower.

In Figure 2 (in which the extraction tower is schematically shown), the line indicated with the reference numeral 1 represents in particular the capacitive sensor; the line 2 represents the position of the level of the liquid mass; the presence of 10 trays is hypothesized as well.

All trays are equal, and are installed alternatively rotated by 180° to each other; an extraction tray is shown in Figure 1, in which also the sizes are reported, which were used in order to carry out the practical tests, as disclosed in detail in the following: the bores provided in the trays have a diameter comprised within the range of from 2 to 15 mm.

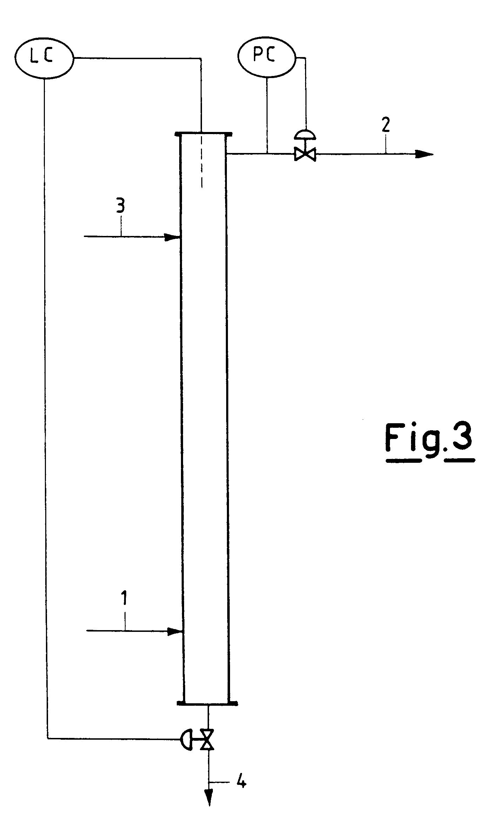

Figure 3 shows in its turn an operative diagram to which reference may be made in order to understand the experimental examples disclosed in the following.

In said Figure, 1 represents CO₂ inlet, 2 is the extract outlet line, 3 is the feed line through which the stream to be submitted to the extraction treatment is fed to the tower, 4 is point were the refined product (SASA) is collected; PC is is the pressure control and LC is the level control For experimental purposes, a tower of 50 mm of diameter was used, which was equipped with trays of AISI 904L with 2 holes of 5 mm and a downcomer of 10 mm of diameter (Figure 1). The continuous phase flows downwards along the downcomer.

The dispersed phase rises by flowing through the tray bores.

Under these conditions, the dispersed phase gets splitted up into bubbles which in the region under the successive tray form again a continuous phase

Along the tower, 10 trays are installed, at mutual distances of about 150 mm.

Under these conditions, the supercritical gas turns ten times from a continuous phase into a subdivided phase; on considering the height of the liquid column which has to be maintained under the holes, the stretch along which the contact occurs between the liquid phase and the dispersed gas is at least 100 mm long.

A series of tests were carried out under different conditions; some of the most significant of them are reported in the following.

### Example 1

| Operating conditions | |
|---|---|
| * Pressure | 150 bar |
| * Temperature | 45°C |
| * Continuous SASA phase/high level | |

| Composition of stream fed to tower | |
|---|---|
| | % by weight |
| * SASA | 40 |
| * NP | 50 |
| * H₂O + H₂SO₄ | 10 |

| Flowrates of entering and leaving streams (Figure 3) | |
|---|---|
| 1. CO₂ | 10 kg/hour |
| 2. Extract | 11.15 kg/hour |
| CO₂ | 10 do. |
| nP | 1.13 do. |
| 3. Feed | 2.50 kg/hour |
| SASA | 1 do. |
| nP | 1.25 do. |
| H₂O + H₂SO₄ | 0.25 do. |
| 4. Refined product | 1.35 kg/hour |
| SASA | 1 do. |
| nP | 1.12 do. |
| H₂O + H₂SO₄ | 0.25 do. |

The concentrations are respectively expressed as ratios of nP to CO₂ and of nP to SASA.

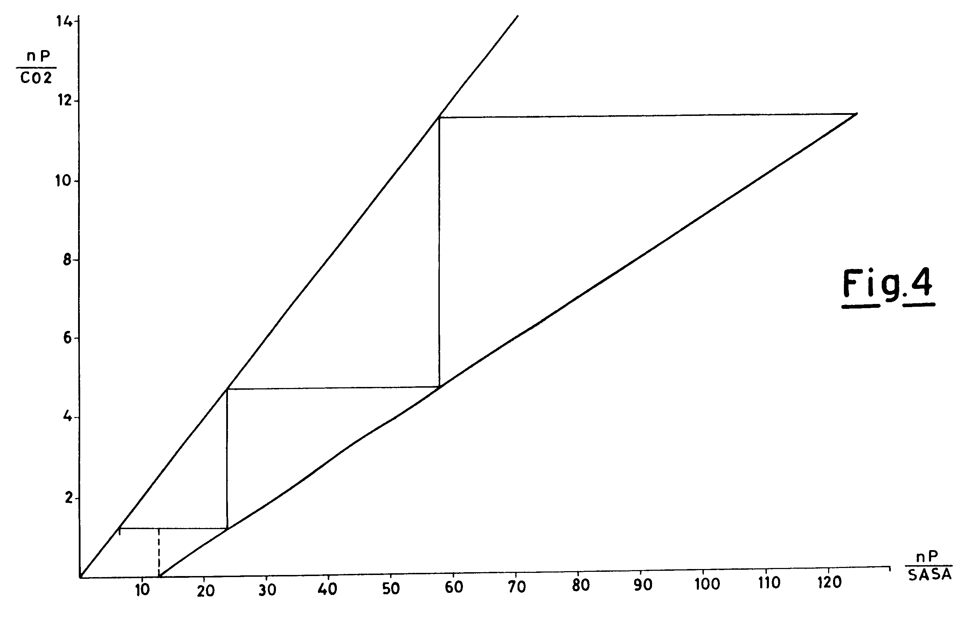

From Figure 4, 2.7 theoretical trays result, which correspond to an efficiency of 27% per each tray.

### Example 2

| Operating conditions | |
|---|---|
| * Pressure | 150 bar |
| * Temperature | 45°C |
| * Continuous SASA phase/high level | |

| Composition of stream fed to tower (The refined stream from 1 was used) | |
|---|---|
| | % by weight |
| * SASA | 73 |
| * NP | 9 |
| * H₂O + H₂SO₄ | 18 |

| Flowrates of entering and leaving streams (Figure 3) | |
|---|---|
| 1. CO₂ | 10 kg/hour |
| 2. Extract | 10.11 kg/hour |
| CO₂ | 10 do. |
| nP | 0.11 do. |
| 3. Feed | 1.37 kg/hour |
| SASA | 1 do. |
| nP | 0.12 do. |
| H₂O + H₂SO₄ | 0.25 do. |
| 4. Refined product | 1.26 kg/hour |
| SASA | 1 do. |
| H₂O + H₂SO₄ | 0.25 do. |
| nP | 0.012 do. |

The concentrations are respectively expressed as ratios of nP to CO₂ and of nP to SASA.

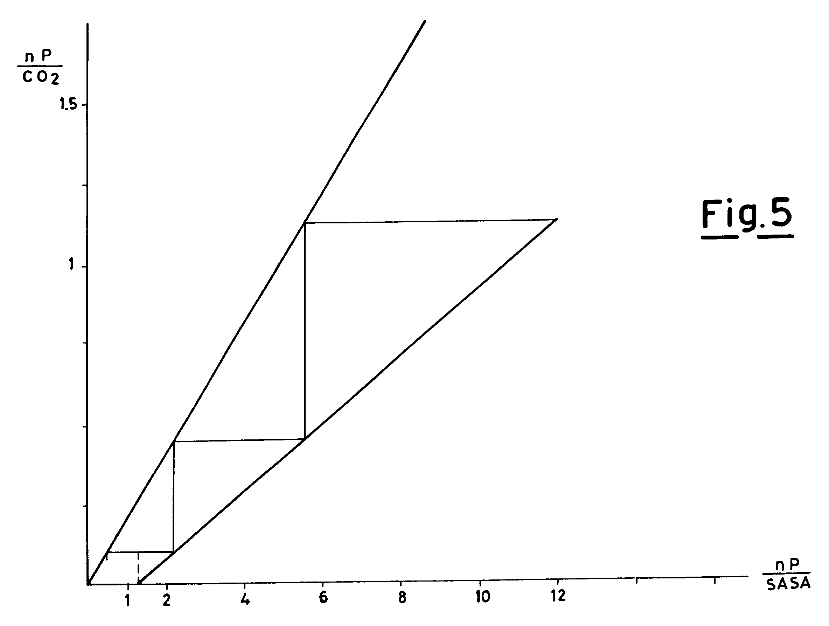

From Figure 5, 2.5 theoretical trays result, which correspond to an efficiency of 25% per each tray.

From the above examples, it results that a high-purity SASA (purity level of about 99%) can be reached with the use of 10 trays and two extractions in cascade.

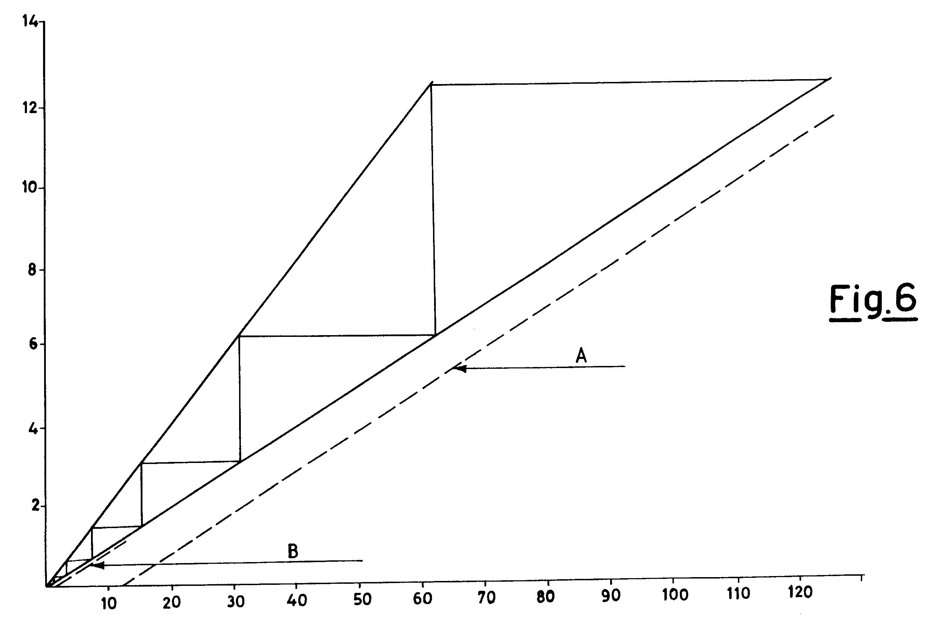

In Figure 6, the behaviour of one single tower is reported; in order to obtain the same result by means of one single extraction, approximately 6 theoretical trays, i.e., 25 actual trays have to be used, resulting in a height of 3,750 mm, easy accomplished: the dotted line "A" relates to test No. 1, the solid line "B" relates to test No. 2.

With the above indicated flowrates, a throughput of 1 kg/hour of purified SASA per 20 cm² of column is obtained; a column having a diameter of 500 mm would enable a production rate of not less than 200 kg/h of purified SASA to be obtained with a continuous process.

In order to practice the present invention at an industrial level the same installation scheme could be maintained, with multi-passage trays being possibly provided in case of large-diameter towers.

## Claims

1. Process for extracting normal paraffins from a liquid phase containing said n.paraffins, in admixture with sulphonated n.paraffins, sulphonic acids, water and sulphuric acids, by the agency of supercritical CO₂, characterized in that the extraction step is carried out in an extraction tower equipped with perforated trays, at a temperature higher than 35°C and a pressure higher than 122 bar (120 atm), said supercritical CO₂ being fed in countercurrent relationship relative to said liquid phase.

2. Process according to claim 1, wherein the perforations of the trays in said extraction tower have a diameter of from 2 mm to 15 mm.

3. Process according to claim 1, wherein said extraction tower contains 10 perforated trays, the inter-tray distance being 150 mm.

4. Process according to claim 1, wherein any two adjoining perforated trays are mounted at an angular shift of 180 degrees from one another.

## Patentansprüche

1. Verfahren zum Extrahieren von Normalparaffinen aus einer diese n-Paraffine im Gemisch mit sulfonierten n-Paraffinen, Sulfonsäuren, Wasser und Schwefelsäuren enthaltenden flüssigen Phase durch Einwirkung von überkritischem Kohlendioxid, dadurch gekennzeichnet, daß die Extraktionsstufe in einem mit perforierten Böden ausgestatteten Extraktionsturm bei einer über 35°C liegenden Temperatur und einem über 122 bar (120 atm) liegenden Druck ausgeführt wird, wobei das überkritische Kohlendioxid im Gegenstrom zur flüssigen Phase zugeführt wird.

2. Verfahren nach Anspruch 1, worin die Perforationen der Böden im Extraktionsturm einen Durchmesser von 2 mm bis 15 mm aufweisen.

3. Verfahren nach Anspruch 1, worin der Extraktionsturm 10 perforierte Böden enthält, wobei der Abstand zwischen den Böden 150 mm ausmacht.

4. Verfahren nach Anspruch 1, worin zwei beliebige benachbarte perforierte Böden um 180° versetzt gegeneinander montiert sind.

## Revendications

1. Procédé d'extraction de paraffines normales d'une phase liquide contenant lesdites paraffines-n, en mélange avec des paraffines-n sulfonées, des acides sulfoniques, de l'eau et des acides sulfuriques, a l'aide de CO₂ supercritique, caractérisé en ce que l'étape d'extraction est effectuée dans une tour d'extraction équipée de plateaux perforés, à une température supérieure à 35°C et à une pression supérieure à 120 bar (120 atm), ledit CO₂ supercritique étant amené à contre-courant par rapport à ladite phase liquide.

2. Procédé selon la revendication 1, dans lequel les perforations des plateaux de ladite tour d'extraction ont un diamètre compris entre 2 et 15 mm.

3. Procédé selon la revendication 1, dans lequel ladite tour d'extraction contient dix plateaux perforés, la distance entre plateaux étant de 150 mm.

4. Procédé selon la revendication 1, dans lequel deux plateaux perforés adjacents quelconques sont montés avec un décalage angulaire de 180° l'un par rapport à l'autre.
